# FASCICULE DE BREVET EUROPEEN

(11) **EP 3 030 477 B1**
(45) Date de publication et mention de la délivrance du brevet: **04.09.2019**
(21) Numéro de dépôt: 14748257.4
(22) Date de dépôt: 29.07.2014
(51) Int. Cl.: B62K 25/08, F16F 9/00, F16F 9/32, B62K 25/04

(54) **DISPOSITIF DE SUSPENSION TÉLESCOPIQUE MUNI D'UN SYSTÈME DE REPÉRAGE DE PRÉCONTRAINTE**
TELESKOPISCHE FEDERUNGSVORRICHTUNG MIT EINEM VORSPANNUNGSIDENTIFIKATIONSSYSTEM
TELESCOPIC SUSPENSION DEVICE PROVIDED WITH A PRESTRESS IDENTIFICATION SYSTEM

(30) Priorité: 06.08.2013 FR 1357830
(43) Date de publication de la demande: 15.06.2016
(73) Titulaire: Decathlon, 59650 Villeneuve D'ascq (FR)
(72) Inventeur: LOZAC'H, Rémi, F-59350 Saint Andre Lez Lille (FR); GIOVANNETTI, Sylvain, F-62000 Arras (FR); BILOE, Antoine, F-80000 Amiens (FR)
(74) Mandataire: Balesta, Pierre
(86) Numéro de dépôt international: PCT/FR2014/051966
(87) Numéro de publication internationale: WO 2015/019001

(56) Documents cités:
- EP-A1- 0 542 282
- EP-B1- 1 567 408
- US-A1- 2004 201 145
- US-A1- 2010 252 972

## Description

### Arrière-plan de l'invention

La présente invention a trait au domaine de la suspension des véhicules et plus particulièrement des dispositifs de suspension télescopique de véhicule et notamment de véhicules à deux roues tels que des bicyclettes.

Les dispositifs de suspension installés sur des bicyclettes permettent d'améliorer l'absorption des chocs qui sont liés à la déformation du terrain sur lequel le véhicule est utilisé.

On connait des dispositifs de suspension classiques configuré pour être attachés au moyeu d'une roue comprenant un premier tube, un second tube coulissant par rapport au premier tube et un ressort principal agencé à l'intérieur desdits tubes, et comprenant en outre un bouchon de réglage de précontrainte du ressort principal installé à l'extrémité supérieure dudit premier tube.

Ce type de dispositif de suspension est notamment décrit plus particulièrement dans le document EP 1567 408 qui présente les caractéristiques indiquées précédemment et présente également une indication d'amplitude de débattement du premier tube coulissant dans le second tube, cette indication étant fournie grâce à une graduation marquée sur la surface extérieure du premier tube. Cependant un inconvénient de ce type de dispositif est la difficulté pour l'utilisateur à manipuler le dispositif de suspension afin d'obtenir un amortissement qui lui convienne.

### Objet et résumé de l'invention

Un but de l'invention est de proposer un dispositif de suspension télescopique remédiant aux inconvénients précités.

Pour ce faire, le bouchon de réglage de précontrainte du ressort principal comprend un système de repérage de précontrainte du ressort principal, représentatif du poids de l'utilisateur.

On comprend que le bouchon de réglage de précontrainte a pour effet de comprimer le ressort principal qui est agencé dans une cavité formée par le premier tube et le second tube. Par ailleurs, l'actionnement du bouchon de précontrainte permet de régler la précontrainte en compression du ressort principal.

C'est ainsi que la mise en rotation du bouchon de précontrainte dans un premier sens, autour de l'axe longitudinal du premier tube, a pour effet d'augmenter la contrainte sur le ressort principal dès lors que la distance entre les deux extrémités du ressort est diminuée par rapport à la distance existante avant rotation dans le premier sens.

En outre, lorsque le bouchon de précontrainte est actionné dans un second sens, opposé au premier sens, la contrainte exercée sur le ressort est diminuée car la distance entre les deux extrémités du ressort est augmentée par rapport à la distance existante avant rotation dans le second sens.

Le réglage de la précontrainte exercée sur le ressort principal est donc réalisé en tournant le bouchon dans un sens ou dans l'autre. L'utilisateur agit donc sur le bouchon pour régler la précontrainte du ressort principal.

Grâce à l'invention, comme le bouchon comprend le système de repérage, l'utilisateur visualise immédiatement, sur le bouchon, le niveau de précontrainte tout en manipulant le bouchon, grâce à quoi le système de repérage de précontrainte l'aide à régler finement le niveau de précontrainte.

En conséquence, on réalise un réglage simple et rapide du dispositif en fonction du poids de l'utilisateur. Le dispositif de suspension télescopique est réglé de façon que la contrainte exercée sur le ressort principal soit en correspondance avec le poids de l'utilisateur. Ainsi, on obtient un amortissement en rapport avec le poids de l'utilisateur.

De manière préférentielle, ledit bouchon de réglage comporte un corps fixé à l'extrémité du premier tube ; ledit corps abrite un plongeur fileté extérieurement et vissé dans une portion intérieure taraudée du corps, ledit plongeur est en appui contre l'une des extrémités du ressort principal, un bouton d'actionnement est monté en rotation à une extrémité du corps en étant couplé en rotation audit plongeur par un agencement coulissant à gorge et nervure longitudinales.

Lorsqu'on actionne le bouton d'actionnement, dans le premier sens autour de l'axe longitudinal, le plongeur est également mis en rotation. Comme le corps est fixe par rapport au premier tube, le plongeur se déplace selon l'axe longitudinal vers l'extrémité du premier tube opposée à celle portant le bouchon. En outre, le plongeur est en contact avec l'une des extrémités du ressort de sorte que le déplacement du plongeur provoque l'augmentation de la précontrainte du ressort principal, ce qui permet d'obtenir un réglage adapté au poids de l'utilisateur.

Lorsqu'on actionne le bouton d'actionnement dans le second sens autour de l'axe longitudinal, le plongeur est également mis en rotation suivant le second sens de sorte que le plongeur vient diminuer la compression que subit le ressort principal. La précontrainte diminue. Pour ce faire, le plongeur remonte vers le corps du bouchon. Ainsi, la compression du ressort est diminuée jusqu'à obtenir un réglage de précontrainte adapté au poids de l'utilisateur, ce réglage étant grandement facilité par la présence du système de repérage.

Par ailleurs, le bouton d'actionnement, monté en rotation sur le corps, comporte un agencement de gorge et de nervure qui coopère avec le plongeur de sorte que lorsque le bouton d'actionnement est mis en rotation dans le premier sens ou le second sens selon l'axe longitudinal, le plongeur est entrainé respectivement dans le premier sens ou le second sens.

De préférence, ledit plongeur comporte un évidement axial dans lequel s'engage un prolongement du bouton d'actionnement, et ledit agencement coulissant est défini entre ledit prolongement et la surface interne dudit évidement axial.

L'évidement axial du plongeur reçoit le prolongement du bouton d'actionnement. La surface interne de l'évidement axial du plongeur comporte des nervures et des gorges qui coopèrent avec le prolongement du bouton d'actionnement. Ainsi, lorsque le bouton d'actionnement est mis en rotation dans le premier sens, le prolongement est mis en rotation, et le plongeur est également mis en rotation dans le premier sens par le fait que le plongeur et le prolongement du bouton d'actionnement comportent des nervures et des gorges complémentaires. Ainsi, on réalise un entrainement direct du plongeur par une action sur le bouton d'actionnement. On obtient ainsi un réglage simple et rapide du dispositif de suspension.

Avantageusement, le bouton d'actionnement comporte une partie extérieure de préhension munie d'une fenêtre, ledit bouton d'actionnement est fixé audit prolongement, un passage est défini entre le plongeur et le prolongement, d'une part, et entre le prolongement et le bouton, d'autre part, ce passage passant en regard de la fenêtre, le système de repérage de précontrainte comporte une bande souple, abritée dans le passage, portant des graduations représentative du poids d'un utilisateur, et la bande souple est fixée en un point du plongeur.

La bande souple est préférentiellement fixée au plongeur par des ergots, des moyens adhésifs ou par tout autre moyen équivalent.

Lorsque le bouton d'actionnement est mis en rotation selon le premier sens, l'une des extrémités de la bande souple, fixée en un point du plongeur, subit un déplacement longitudinal selon l'axe longitudinal vers l'intérieur du premier tube. Le déplacement de la bande souple est associé directement au déplacement du plongeur. Le déplacement de la bande souple s'effectue à l'intérieur du passage défini entre le plongeur et le prolongement d'une part et entre le prolongement et le bouton d'autre part.

En conséquence, la bande souple, disposée dans le passage ménagé en regard de la fenêtre, se déplace et fait défiler les graduations inscrites sur la partie supérieure de la bande. Lorsque la graduation qui correspond au poids de l'utilisateur est affichée à hauteur de la fenêtre, on obtient le réglage du dispositif de suspension télescopique en fonction du poids de l'utilisateur. Ainsi, la précontrainte exercée sur le ressort principal du dispositif de suspension télescopique est en fonction du poids de l'utilisateur.

Avantageusement, selon un autre mode de réalisation, le système de repérage de précontrainte du ressort principal est porté par le prolongement, le bouton d'actionnement est mobile longitudinalement par rapport au plongeur entre deux butées espacées longitudinalement, et le système de repérage est porté par le bouton d'actionnement lui-même. Le système de repérage de précontrainte comprend avantageusement des échelles de graduations indiquant différents poids d'utilisateur. Chaque graduation peut représenter un échelon de 5 kilogrammes ou encore tout autre graduation représentative du poids d'utilisateur.

Le prolongement du bouton d'actionnement comporte en sa partie inférieure des éléments de coopération avec les butées présentes dans la partie supérieure du plongeur. Le bouton d'actionnement est en position d'actionnement lorsque les éléments de coopération coopèrent avec les butées disposées sur le plongeur, de sorte que les graduations portées sur le prolongement du bouton d'actionnement sont lisibles par l'utilisateur.

Lorsque le bouton d'actionnement est actionné dans le premier sens, il entraine directement le plongeur en rotation dans le premier sens. En conséquence, le plongeur se déplace de manière longitudinale selon l'axe longitudinal de sorte à venir comprimer le ressort principal et augmenter la précontrainte dudit ressort. En outre, dans le même mouvement que le plongeur, le bouton d'actionnement pénètre dans le corps. Pour régler la précontrainte, on tourne le bouton d'actionnement jusqu'à ce que la graduation correspondant au poids de l'utilisateur soit alignée avec la surface supérieure du bouchon. On obtient alors un réglage simple et rapide du dispositif de suspension en fonction du poids de l'utilisateur.

Selon un autre mode de réalisation, le bouton d'actionnement comporte des ailettes articulées.

Lorsque les ailettes, montées en rotation par rapport à la partie supérieure du bouton d'actionnement, sont positionnées dans des plans sensiblement parallèles et perpendiculaires à la surface supérieure du bouchon, lesdites ailettes offrent une surface de préhension permettant de saisir et actionner facilement le bouton d'actionnement.

En outre, les ailettes articulées peuvent être rangées en étant positionnées de manière à épouser la surface supérieure du bouchon de manière à éviter tout déréglage intempestif de la précontrainte.

Selon un autre mode de réalisation, le système de repérage de précontrainte du ressort principal est porté par une tige insérée dans un logement formé dans le prolongement ; un mécanisme à rochet associé à la tige est agencé à une extrémité inférieure du prolongement.

Le logement comporte un orifice réalisé à la surface supérieure du bouton d'actionnement de sorte que la tige s'extrait par la partie supérieure du bouton d'actionnement.

La tige présente une position déployée dans laquelle elle fait saillie hors du bouchon, et une position escamotée dans laquelle elle est logée dans le bouchon.

Lorsque la tige est en position déverrouillée, une partie de la tige est extraite de l'orifice réalisé dans le bouton d'actionnement. Ainsi, une partie de la tige est disposée au-dessus de la surface supérieure du bouton d'actionnement. Ladite tige est maintenue dans la position déverrouillée au moyen d'un second ressort. Le second ressort a une première extrémité en appui contre la face inférieure de l'évidement du plongeur. Le second ressort comporte également une seconde extrémité qui coopère avec la tige de sorte à maintenir ladite tige en tension.

Par ailleurs, le système de repérage comprend une graduation permettant de repérer le poids correspondant à la précontrainte recherchée. En conséquence, lorsque le bouton d'actionnement est actionné dans le premier sens autour de l'axe longitudinal, et lorsque la tige est maintenue en position déverrouillée, le plongeur se déplace vers l'extrémité opposée à celle portant le bouchon et comprime le ressort principal. En outre, la tige, par l'intermédiaire du second ressort en appui contre la surface intérieure du plongeur, suit le déplacement du plongeur.

On comprend que les graduations disposées sur la tige accompagnent le déplacement du plongeur. Ainsi, le réglage du dispositif de suspension s'effectue lorsque la graduation correspondant au poids de l'utilisateur est alignée avec le bord supérieur de la fenêtre ménagée dans le bouton d'actionnement.

En outre, la tige est maintenue en position verrouillée au moyen d'éléments de blocage disposés à l'extrémité inférieure de ladite tige qui coopèrent avec la surface inférieure du prolongement du bouton d'actionnement. Grâce à cet aspect, la tige de réglage est disposée dans le logement, ce qui évite les détériorations dues à l'environnement extérieur.

Selon encore une autre variante de réalisation, le bouton a la forme d'une clé qui vient s'engager dans un orifice ménagé dans la partie supérieure du bouchon, la clé coopérant avec le plongeur.

Le bouchon comporte une fenêtre dans lequel la clé est introduite de sorte que la clé coopère avec le plongeur, et ladite clé suit le déplacement du plongeur. Ainsi, la clé comportant les graduations représentant le poids du l'utilisateur disposées sur la partie introduite dans l'orifice, suit le déplacement du plongeur lorsque le bouton d'actionnement est actionné afin d'aligner la graduation correspondant au poids de l'utilisateur avec le bord supérieur de fenêtre.

Par ailleurs, la clé de réglage est amovible afin que ladite clé ne soit pas soumise aux agressions de l'environnement extérieur.

En outre, l'invention porte également sur un cadre de vélo comportant au moins un dispositif de suspension télescopique conforme à l'invention.

### Brève description des dessins

L'invention sera mieux comprise à la lecture de la description qui suit de modes de réalisation de l'invention donnés à titre d'exemple non limitatifs, en référence aux dessins annexés, sur lesquels :
- la figure **1** est une vue d'un vélo sur lequel est installé un dispositif de suspension conforme à l'invention ;
- la figure **2** est une vue en perspective d'une fourche comportant un dispositif de suspension conforme à l'invention ;
- la figure **3** est une vue en coupe du dispositif de suspension conforme à l'invention ;
- la figure **4** est une vue en éclaté d'un premier mode de réalisation du bouchon de réglage de précontrainte ;
- les figures **5A et 5B** sont des vues en coupe du premier mode de réalisation du bouchon de réglage de précontrainte ;
- les figures **6A et 6B** sont des vues en coupe du premier mode de réalisation du bouchon de réglage de précontrainte monté sur le dispositif de suspension dans une première position et une deuxième position ;
- la figure **7** est une vue de dessus du premier mode de réalisation du bouchon de réglage de précontrainte ;
- la figure **8** est une vue en éclaté d'un second mode de réalisation du bouchon de réglage de précontrainte ;
- la figure **9** est une vue en perspective d'un second mode de réalisation du bouchon de réglage de précontrainte ;
- la figure **10** est une vue en coupe du second mode de réalisation du bouchon de réglage de précontrainte monté sur le dispositif de suspension dans une première position ;
- la figure **11** est une vue en coupe du second mode de réalisation du bouchon de réglage de précontrainte monté sur le dispositif de suspension dans une deuxième position ;
- la figure **12** est une vue en perspective d'un troisième mode de réalisation du bouchon de réglage de précontrainte ;
- les figures **13A** et **13B** sont des vues en coupe du troisième mode de réalisation du bouchon de réglage de précontrainte monté sur le dispositif de suspension où le plongeur est dans une première position ;
- les figures **14A** et **14B** sont des vues en coupe du troisième mode de réalisation du bouchon de réglage de précontrainte monté sur le dispositif de suspension où le plongeur est dans une deuxième position ;

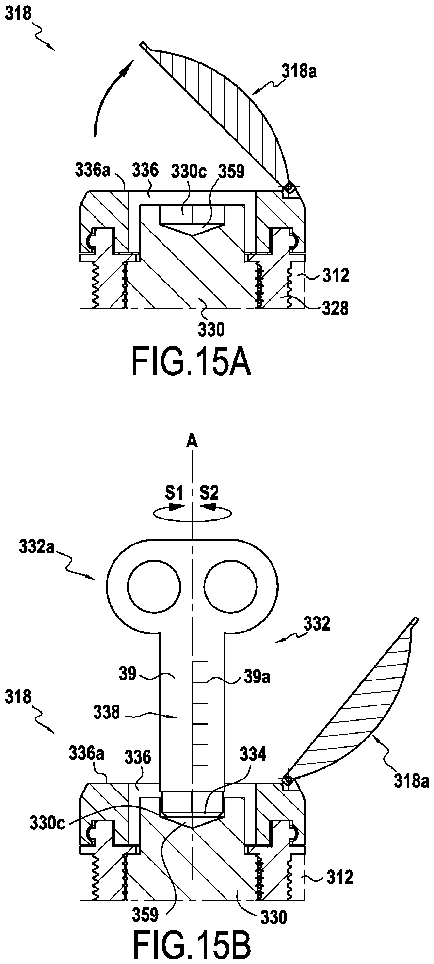

- les figures **15A** et **15B** est une vue en coupe du quatrième mode de réalisation du bouchon de réglage de précontrainte.

### Description détaillée de l'invention

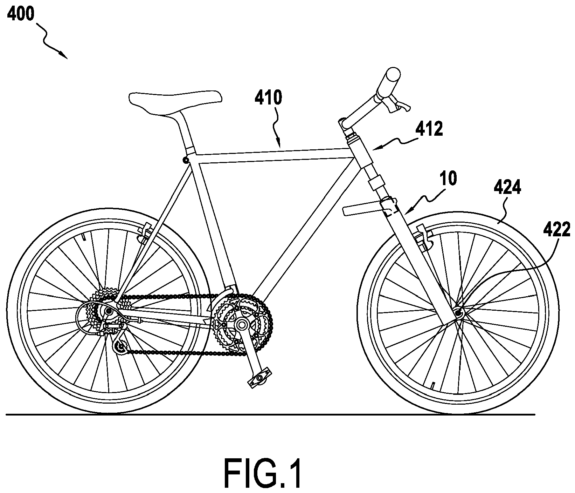

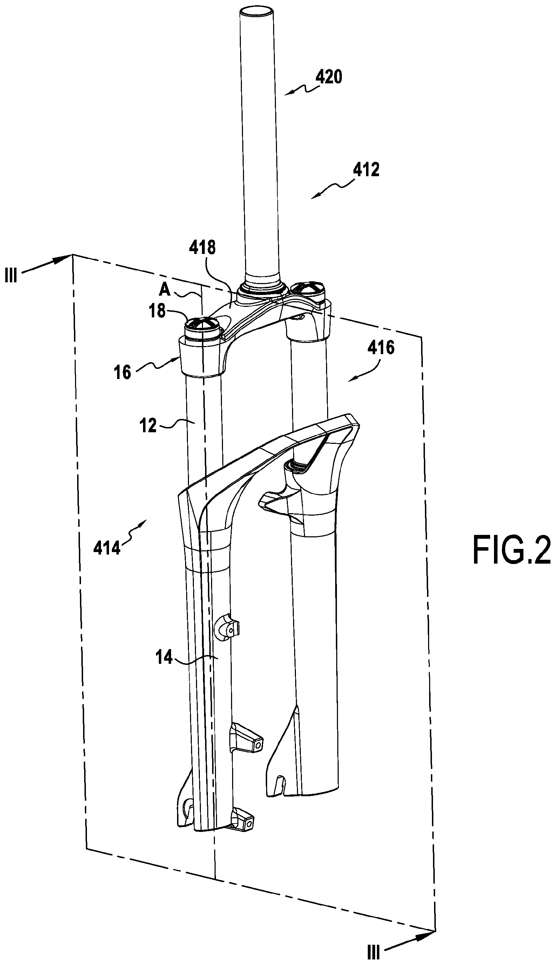

Sur les figures **1** et **2****,** on a représenté un dispositif de suspension **10** conforme à la présente invention monté sur un vélo **400** muni d'un cadre **410** comportant une fourche directionnelle **412** comprenant deux bras **414** et **416** attaché l'un à l'autre au moyen d'un connecteur **418** relié de manière solidaire à un tube **120** de direction. Le dispositif de suspension est relié au moyeu **422** d'une roue **424.**

Selon, un autre exemple, la fourche **412** pourrait comporter un seul bras relié au tube de direction de la fourche.

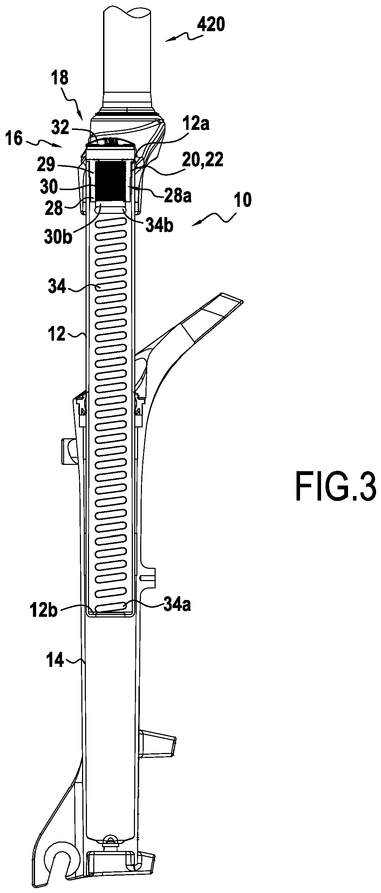

Sur la figure **2** et la figure **3****,** le bras **414** comporte un premier tube **12** ayant un diamètre inférieur au diamètre d'un deuxième tube **14.** En outre le dit premier tube **12** est en partie inséré dans le deuxième tube **14.** Par ailleurs, le premier tube **12** est monté coulissant par rapport au deuxième tube **14** selon un axe longitudinal **A** du premier tube **12.**

En outre, un bouchon de précontrainte **18** est vissé à une extrémité supérieure **16** du premier tube **12,** au moyen d'un premier taraudage **20** disposé à l'extrémité supérieure d'une surface intérieure **12a** du premier tube **12** et d'un filetage **22** disposé sur une surface extérieure **24** d'un corps **28** du bouchon de précontrainte **18.** Le corps **28** du bouchon de précontrainte s'étend selon l'axe longitudinal **A.** Le corps **28** de forme cylindrique présente une portion intérieure dans lequel un alésage **29** s'étend selon l'axe longitudinal **A.** L'alésage **29** comporte un deuxième taraudage **28a** grâce auquel est vissé un plongeur **30** comportant sur une paroi extérieure un second filetage **30a.**

Le bouchon de précontrainte **18** comporte en outre un bouton d'actionnement **32** monté rotatif par rapport au corps **28** selon l'axe longitudinal **A** du premier tube **12.**

Le dispositif de suspension **10** comporte en outre un ressort principal **34** disposé à l'intérieur du premier tube **12** et du deuxième tube **14.** Une première extrémité **34a** du ressort principal **34** est en appui contre la face intérieure **12b** du premier tube **12.** En outre, une deuxième extrémité **34b** du ressort principal **34** est en appui contre une face inférieure **30b** du plongeur **30.**

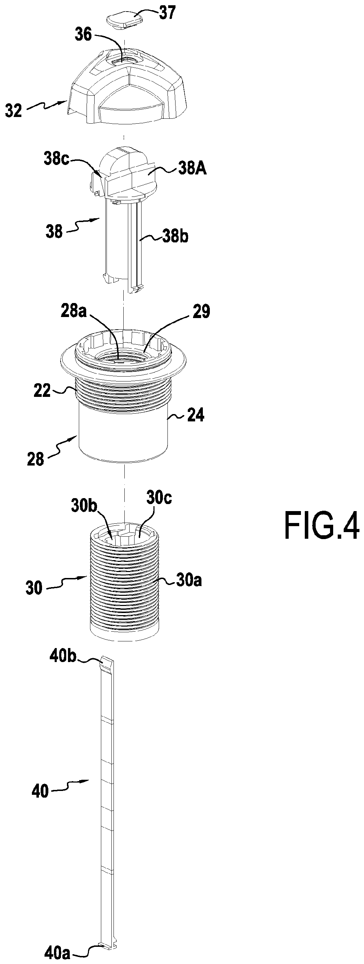

Selon un premier mode de réalisation, en se référant aux figures **4** à **6****,** le bouton d'actionnement **32** est monté rotatif par rapport au corps **28** selon l'axe longitudinal **A.** On constate également que le bouton d'actionnement comporte une fenêtre **36** affleurant la surface supérieure **32a** du bouton d'actionnement **32.** En outre, la surface extérieure **24** du corps comporte le filetage **22.** Dans cet exemple, la fenêtre **36** est protégée par une pièce **37** de protection transparente permettant à la fois de protéger et lire les informations disponibles.

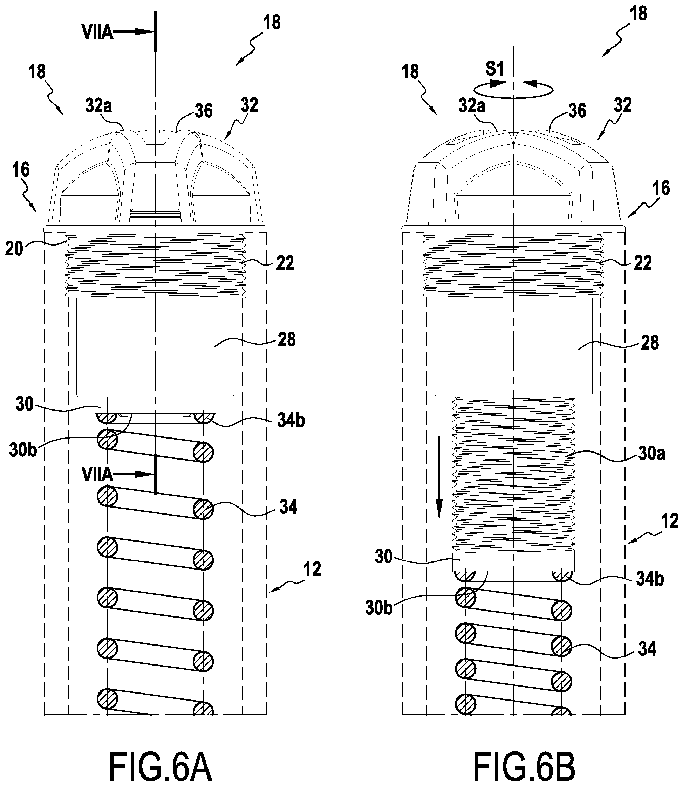

En outre, les figures **6A** et **6B** montrent le bouchon de précontrainte **18** selon le premier mode de réalisation monté à l'extrémité supérieure **16** du premier tube **12.** Le bouchon de précontrainte **18** comprend le plongeur **30** qui comporte la face inférieure **30b** sur laquelle la première extrémité **34b** du ressort principal **34** vient en appui. A l'aide de la vue en éclaté de la figure **4****,** on constate que le plongeur **30** comporte un évidement axial **30c** dans lequel est inséré un prolongement **38** qui est relié au bouton d'actionnement **32.** En outre, le bouton d'actionnement **32** comporte des moyens de coopération avec la paroi **38a** du prolongement **38.**

Conformément à l'invention, le dispositif de suspension comporte en outre un système de repérage de précontrainte **39** du ressort principal représentatif du poids de l'utilisateur. Dans ce mode de réalisation, le système de repérage de précontrainte **39** comporte une bande souple **40** fixée au plongeur **30.** Plus précisément, une première extrémité **40a** de la bande souple **40** est fixée au plongeur **30.** La bande souple **40** peut être fixée par des moyens tels que des moyens adhésifs ou des moyens tels que des ergots de fixation ou d'autres moyens pouvant remplir cette fonction. Par ailleurs, une deuxième extrémité **40b** de la bande souple reste libre.

La bande souple **40** est disposée dans un passage **41** ménagé entre le plongeur **30** et le prolongement **38** d'une part et entre le prolongement **38** et le bouton d'actionnement **30** d'autre part. Ainsi, la bande souple **40** est disposée en regard de la fenêtre **36.**

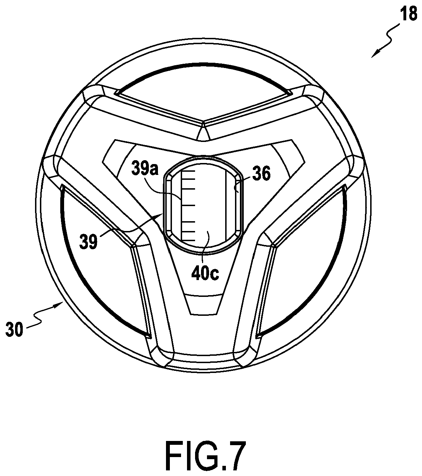

Sur la figure **7****,** en vue de dessus, la fenêtre **36** laisse apparaitre une face supérieure **40c** de la bande souple **40** qui présente des graduations **39a** représentant différents poids d'un utilisateur. Chaque graduation **39a** peut représenter à nouveau un échelon de 5 kilos ou encore toute échelle représentatif du poids.

En se référant à nouveau aux figures **6A** et **6B****,** on réalise une rotation du bouton d'actionnement **32** par rapport au corps **28** dans un premier sens **S1** autour de l'axe longitudinal **A,** le bouton d'actionnement **32** entraine dans son mouvement de rotation le prolongement **38.** Ledit prolongement **38** comporte des seconds moyens de coopération **38b** du type nervures. Le prolongement **38** entraine le plongeur **30** en rotation dans le premier sens **S1.** Le plongeur **30** étant vissé par rapport au corps **28** au moyen du filetage **30a,** ledit plongeur **30** transforme le mouvement de rotation en mouvement de translation. Le plongeur **30** descend alors à l'intérieur du premier tube **12.** Le ressort est alors comprimé, de sorte que la précontrainte augmente.

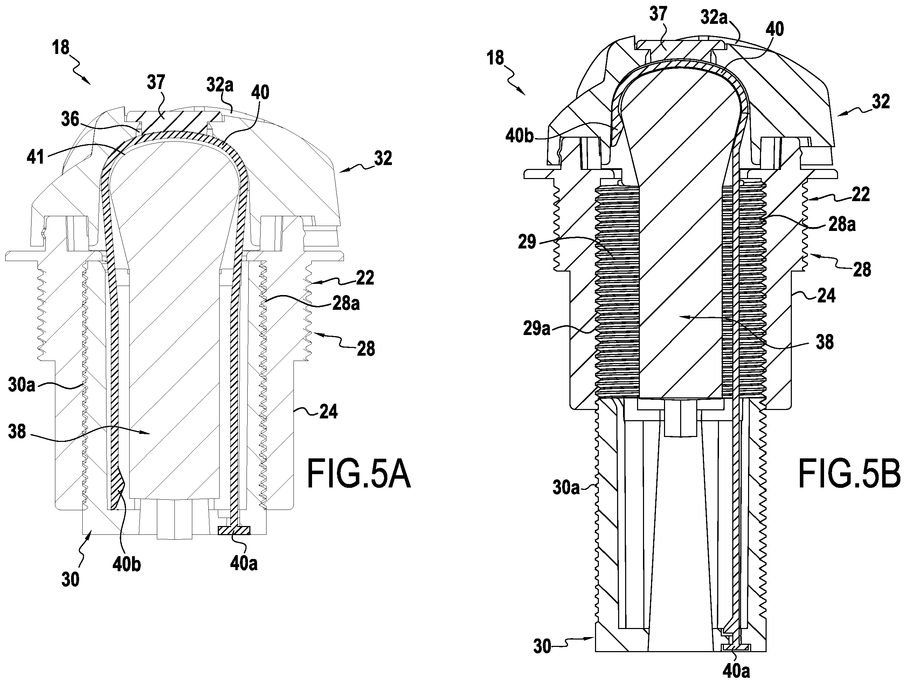

En outre, en se référant à nouveau à la figure **5B****,** on constate que le plongeur **30** entraine la bande souple **40** dans son mouvement. Ainsi, la bande souple défile devant la fenêtre **36.** Lesdites graduations **39a** inscrites sur la face supérieure **40c** de la bande souple **40,** défilent devant la fenêtre **36** lorsque la bande souple est mise en mouvement par l'actionnement du bouchon, de manière à indiquer à l'utilisateur à quel poids correspond la précontrainte du ressort principal.

Lorsqu'on réalise une rotation du bouton d'actionnement **32** par rapport au corps dans le second sens **S2** selon l'axe longitudinal **A,** le bouton d'actionnement **32** entraine dans son mouvement de rotation le prolongement **38.** Comme les nervures **38b** coopèrent avec des gorges **30b** formées dans la paroi de l'évidement axial **30c** du plongeur **30,** le prolongement entraine le plongeur **30** en rotation dans le second sens **S2.** Le plongeur **30** étant vissé au corps **28,** ledit plongeur **30** transforme le mouvement de rotation en mouvement de translation. Ainsi, le plongeur monte à l'intérieur du corps vers l'extrémité qui porte le bouchon **18,** de sorte que la précontrainte diminue.

Ainsi, on arrête la mise en rotation dans le premier sens **S1** ou le second sens **S2** du bouton d'actionnement **32** lorsque la graduation **39a** correspondant au poids de l'utilisateur est indiquée dans la fenêtre **36.**

On constate par ailleurs que la deuxième extrémité **40b** de la bande souple comporte un bourrelet de manière à venir en butée contre la paroi **38c** du prolongement **38** lorsque le plongeur **30** et la bande souple **40** sont arrivés au maximum de leur course.

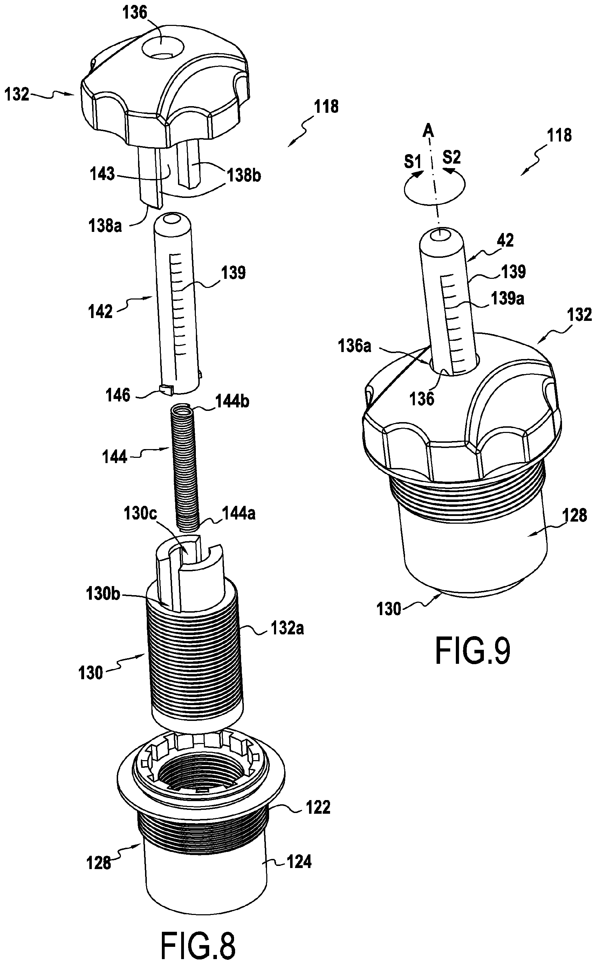

En se référant aux figures **8** à **11****,** on va décrire un deuxième mode de réalisation.

Le bouchon de précontrainte **118** comporte, de la même manière que dans le premier mode de réalisation, le bouton d'actionnement **132** qui est montée rotatif par rapport au corps **128** selon l'axe longitudinal **A.**

Le plongeur **130** comporte un filetage sur la surface extérieure **130a.** Le filetage **130a** du plongeur **130** coopère avec le taraudage **128a** réalisé sur la paroi intérieur du corps.

En outre, le plongeur **130** comporte l'évidement axial **130c** et comporte également les gorges **130b** longitudinales dans lesquelles s'insèrent les nervures **138b** du prolongement **138.** Le prolongement **138** est fixé au bouton d'actionnement **132.** Le bouton d'actionnement et le prolongement peuvent être deux pièces distinctes assemblées ou être réalisées en une seule pièce.

Le bouton d'actionnement **132** comporte également un orifice **136** réalisée à la surface supérieure **132a** qui s'ouvre sur un logement **43** formé dans le prolongement **138,** ledit logement **143** s'étend de manière longitudinal selon l'axe longitudinal **A.** La fenêtre **136** permet le passage d'une tige **142,** faisant partie du système de repérage de précontrainte, qui s'étend de manière longitudinal selon l'axe longitudinal **A** dans le logement **143.** Cette tige **142** présente une position déployée dans laquelle elle fait saillie hors du bouchon **118** selon la direction longitudinale **A,** et une position escamotée dans laquelle elle est entièrement logée à l'intérieur du bouchon **118.** Dans cet exemple, la tige **142** comporte sur une face extérieure le système de repérage de précontrainte **139** comportant l'échelle de graduations **139a** représentative du poids d'un utilisateur. La tige **142** est creuse et reçoit un deuxième ressort **144** à l'intérieur. Le deuxième ressort qui s'étend selon l'axe longitudinal comporte une première extrémité **144a** en appui contre une paroi intérieure **130d** du plongeur **130** et comporte également une deuxième extrémité **144b** en appui contre une face intérieure **142a** de la tige **142.** La tige **142** comporte en outre dans sa partie inférieure **142b** des ergots **146** qui coopèrent avec la surface inférieure du prolongement lorsque la tige **142** est position verrouillée.

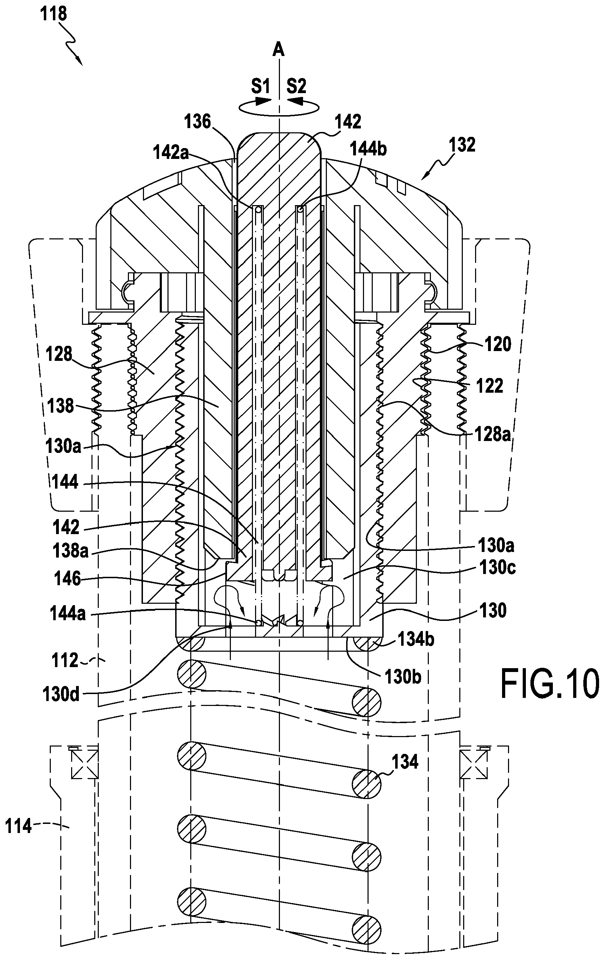

Dans la figure **10****,** la tige **142** est en position escamotée, lorsque les ergots **146** disposés dans la partie inférieure **142b** de la tige **142** sont maintenus en appui contre la surface inférieure **138a** du prolongement **138** par le biais d'une force parallèle à l'axe longitudinal **A** qu'exerce le deuxième ressort **144** sur la tige **142.**

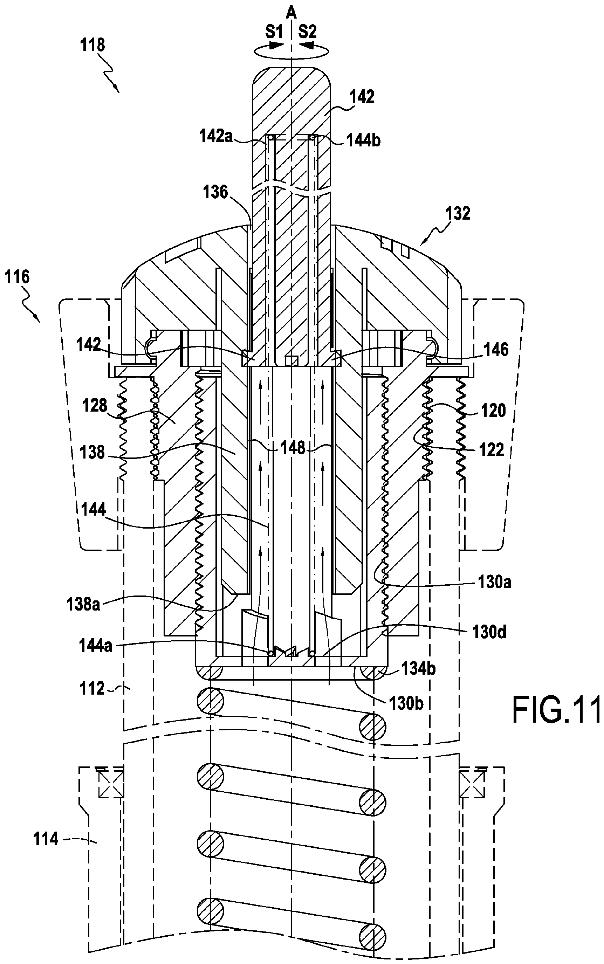

Sur la figure **11****,** la tige **142** est en position déployée. Pour passer de la position escamotée à la position déployée, on réalise une rotation de la tige **142** selon le premier sens **S1** ou le second sens **S2** de sorte que les ergots **146** soient alignés avec des guides **148** s'étendant dans le logement selon l'axe longitudinal. La tige **142** subit un déplacement selon l'axe longitudinal. Ainsi, les graduations **139a** apparaissent pour réaliser le réglage du dispositif de suspension **10.**

On réalise ensuite une rotation du bouton d'actionnement **132** par rapport au corps **128** selon le premier sens **S1** ou selon le second sens **S2** autour de l'axe longitudinal **A.** Le bouton d'actionnement **132** et le prolongement **138** qui lui est associé entraine en rotation le plongeur **130** qui selon le premier sens **S1** ou le second sens **S2.** Le plongeur **130** étant montée par filetage au corps **128,** ledit plongeur **130** transforme le mouvement de rotation en mouvement de translation selon l'axe longitudinal **A.** Le plongeur **130** entraine dans son mouvement de translation le deuxième ressort **144** qui est en appui contre sur la surface inférieure **130d.**

Lorsque le plongeur **130** se déplace vers l'extrémité inférieure **112b** du premier tube **112,** le deuxième ressort **144** et la tige **142** se déplacent également vers l'extrémité inférieure **112b** du premier tube **112.** De la même manière, le plongeur **138** se déplace vers l'extrémité supérieure **16** du premier tube **112,** le deuxième ressort **144** et la tige **142** réalise également un mouvement vers l'extrémité supérieure **116** du premier tube **112.** Dans ce dernier cas la partie de la tige **142** extraite du bouchon de précontrainte **118** est plus importante.

Lorsque la graduation **139a** correspondant au poids de l'utilisateur est alignée avec le bord **136a** de la fenêtre **136,** la rotation du bouton d'actionnement **132** est stoppée, puis la tige **142** est amenée en position escamotée.

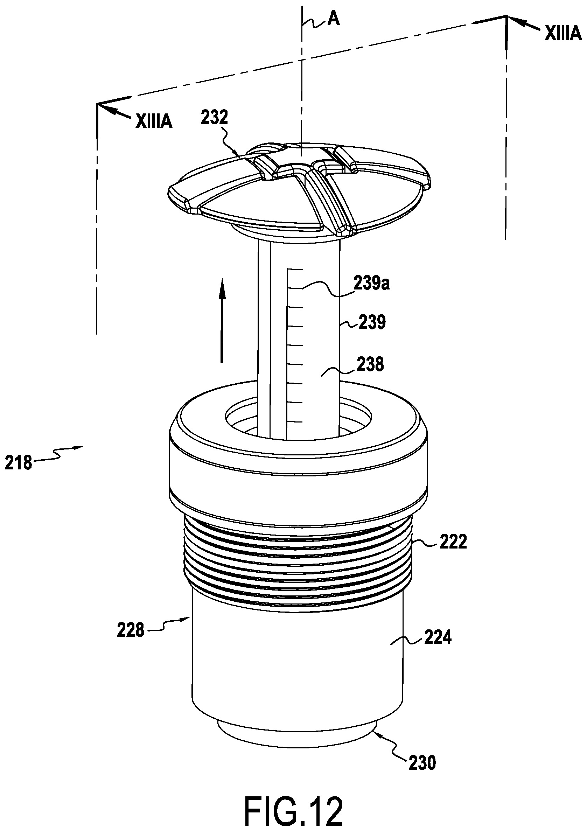

A présent, en se référant aux figures **12** à **14****,** on décrit un troisième mode de réalisation de l'invention.

De la même façon que les modes de réalisations précédents, le bouchon **218** de précontrainte comporte un bouton d'actionnement **232,** un corps **228,** un plongeur **230.** Le prolongement **238** comporte sur la face extérieure le système de repérage de précontrainte **239** comprenant l'échelle de graduation **239a** représentative du poids de l'utilisateur.

En outre, le prolongement **238** est fixé à la partie inférieure du bouton d'actionnement **230.** Le prolongement **238** comporte dans sa partie inférieure **238c** des éléments de blocage constitués d'ergots **248** qui coopère avec des cavités **259** disposées dans la partie supérieure de l'évidement axial **230c** du plongeur **230.**

Pour réaliser le réglage du dispositif de suspension **10,** on extrait en partie de l'évidement axial **230c,** le prolongement **238** associé au bouton d'actionnement **232.** On coulisse le prolongement **238** dans le plongeur **230** au moyen de nervures **238b** coopérant avec les gorges **230b** du plongeur jusqu'à ce que les ergots **248** viennent se bloquer dans les cavités **259.**

En outre, le bouton d'actionnement **232** comporte des ailettes montée en rotation selon un axe perpendiculaire **B** à l'axe longitudinal **A.** Ainsi les ailettes **260** présentent une surface inférieure plane **260a** qui épouse la forme du bouchon **218.** Lorsque les ailettes **260** ont réalisé une rotation de 90° autour des axes **B,** les surfaces **260a** planes présentent l'avantage de former une surface de préhension du bouton d'actionnement facilitant la mise en rotation du bouton d'actionnement **232.**

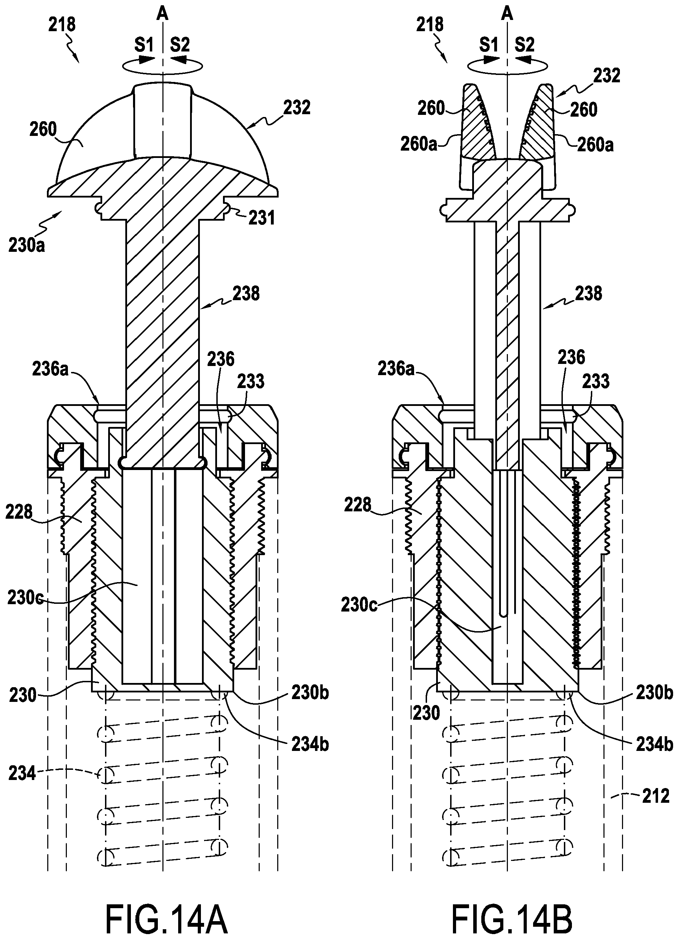

En se référant aux figures **14A** et **14B****,** lorsqu'on réalise une rotation du bouton d'actionnement **232** selon le premier sens **S1** ou selon le second sens **S2,** les ailettes **260** sont positionnées des plans parallèles à l'axe longitudinal **A,** et les ergots **248** coopèrent avec les cavités **259.** La rotation du bouton d'actionnement entraine directement le plongeur **232** en rotation selon l'axe longitudinal **A.** Lorsque la graduation **239a** correspondant au poids de l'utilisateur est alignée avec le bord **236a** de la fenêtre **236,** on arrête la rotation du bouton d'actionnement **232.**

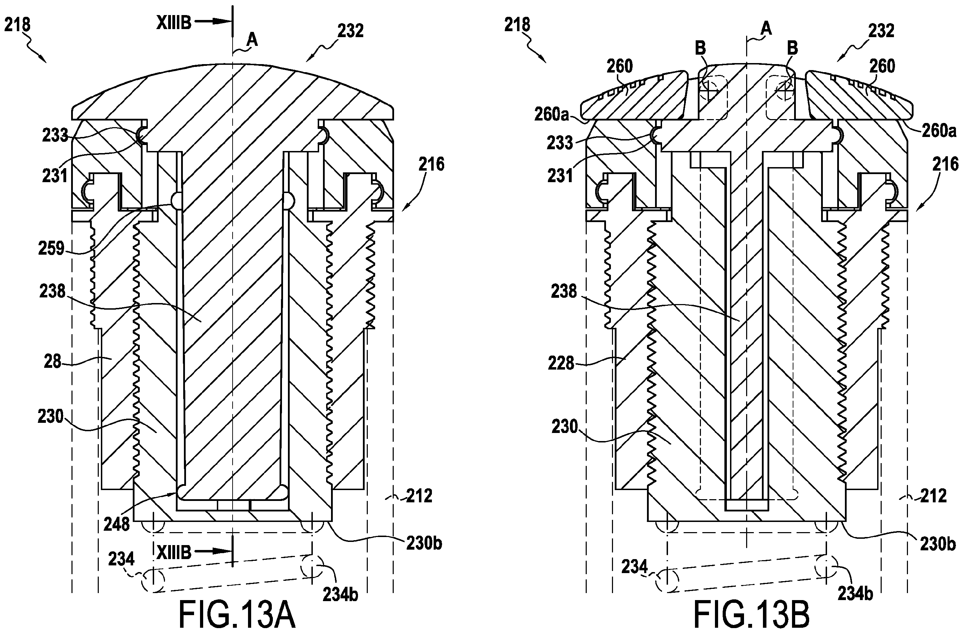

Selon les figures **13A** et **13B****,** en position rangée, le prolongement **38** solidaire du bouton d'actionnement est complètement introduit dans l'évidement axial **232c** du plongeur. On constate en outre que le bouton d'actionnement comporte dans sa partie supérieure **232a** un moyen de verrouillage de position constitué d'une bague **231** s'insérant dans une forme complémentaire **233** disposé dans la partie supérieure du bouchon **218.**

Selon un quatrième mode de réalisation, le bouchon **318** comprend le corps **328** monté vissé sur le premier tube **312,** le bouton d'actionnement **332** et le plongeur **330** vissé à l'intérieur du corps **328.** Le bouton d'actionnement **332** prend la forme d'une clé amovible **332.** Le bouchon **318** comprend une fenêtre **336.**

La clé **332** comporte des oreilles **332a** de préhension. La clé **332** comporte également le prolongement **338** comprenant le système de repérage de précontrainte. La clé **332** comporte en outre, dans sa partie inférieure, des moyens de coopération **334** qui sont configurés pour coopérer avec la cavité **359** située sur la surface intérieure de l'évidement axial **330c** du plongeur de sorte que la clé **332** peut être rendue solidaire du plongeur **330.**

Pour réaliser le réglage du dispositif de suspension **10,** on insère la clé **332** dans l'évidement axial **330c** du plongeur jusqu'à ce que les moyens de coopération **334** viennent se bloquer dans la cavité **359.**

Lorsqu'on réalise une rotation de la clé **332** selon le premier sens **S1** ou selon le second sens **S2,** la clé entraine directement le plongeur **330** en rotation autour de l'axe longitudinal **A** ce qui provoque également la montée ou la descente du plongeur et, par voie de conséquence, la diminution ou l'augmentation de la précontrainte. Lorsque la graduation **339a** correspondant au poids de l'utilisateur est alignée avec le bord **336a** de la fenêtre **336,** on arrête la rotation de la clé **332.**

Par ailleurs, le bouchon **318** comporte un couvercle **318a** monté pivotant de sorte à occulter l'évidement axial **330c** formé à l'intérieur du plongeur **330** lorsque la clé **332** est retirée de l'évidement axial **330c.**

## Revendications

1. Dispositif de suspension télescopique (10) configuré pour être attaché au moyeu (422) d'une roue (424) comprenant un premier tube (12,112,212), un second tube (14, 114, 214) coulissant par rapport au premier tube et un ressort principal (34, 134, 234) agencé à l'intérieur desdits tubes, et comprenant en outre un bouchon (18, 118, 218, 318) de réglage de précontrainte du ressort principal (34, 134, 234) installé à l'extrémité supérieure (16) dudit premier tube (12, 112, 212), **caractérisé en ce que** le bouchon (18, 118, 218) de réglage de précontrainte du ressort principal comprend un système de repérage de précontrainte (39, 139, 239) du ressort principal (34, 134, 234) représentatif du poids de l'utilisateur.

2. Dispositif de suspension télescopique (10) selon la revendication 1, **caractérisé en ce que** ledit bouchon (18, 118, 218, 318) de réglage comporte un corps (28, 128, 228) fixé à l'extrémité supérieure (16) du premier tube, **en ce que** ledit corps (28, 128, 228) abrite un plongeur (30, 130, 230, 330) fileté extérieurement et vissé dans une portion intérieure taraudée du corps (28, 128, 228), **en ce que** ledit plongeur (30, 130, 230, 330) est en appui contre l'une des extrémités (34b, 134b, 234b) du ressort principal (34, 134, 234), et **en ce qu'**un bouton d'actionnement (32, 132, 232, 332) est monté en rotation à une extrémité du corps (28, 128, 228) et couplé en rotation audit plongeur (30, 130, 230, 330) par un agencement coulissant à gorge (30b) et nervure (38b) longitudinales.

3. Dispositif de suspension télescopique (10) selon la revendication 2, **caractérisé en ce que** ledit plongeur (30) comporte un évidement axial (30c) dans lequel s'engage un prolongement (38) du bouton d'actionnement (32), et **en ce que** ledit agencement coulissant est défini entre ledit prolongement et la surface interne dudit évidement axial.

4. Dispositif de suspension télescopique (10) selon la revendication 3, **caractérisé en ce que** le bouton d'actionnement (32) comporte une partie extérieure de préhension munie d'une fenêtre (36), **en ce que** ledit bouton d'actionnement (32) est fixé audit prolongement (38), **en ce qu'**un passage (41) est défini entre le plongeur (30) et le prolongement (38), d'une part, et entre le prolongement (38) et le bouton (32), d'autre part, ce passage (41) passant en regard de la fenêtre (36), **en ce que** le système de repérage de précontrainte (39) comporte une bande souple (40), abritée dans le passage, portant des graduations (39a) représentative du poids d'un utilisateur, et **en ce que** la bande souple (40) est fixée en un point du plongeur (30) et en regard de la fenêtre (36), de sorte que l'actionnement du bouton d'actionnement fait défiler les graduations (39a) devant la fenêtre (36) et modifie la précontrainte du ressort principal (34).

5. Dispositif de suspension télescopique (10) selon la revendication 3, **caractérisé en ce que** le système de repérage de précontrainte (239) est porté par le prolongement (238), **en ce que** le bouton d'actionnement (232) est mobile longitudinalement par rapport au plongeur (230) entre deux cavités (259) espacées longitudinalement, et **en ce que** le système de repérage (239) est porté par le bouton lui-même.

6. Dispositif de suspension télescopique (10) selon la revendication 5, **caractérisé en ce que** le bouton d'actionnement (232) comporte des ailettes (260) articulées épousant chacune une partie de la surface supérieure du bouchon (218).

7. Dispositif de suspension télescopique (10) selon la revendication 3, **caractérisé en ce que** le système de repérage de précontrainte (139) du ressort principal (134) est porté par une tige (142) insérée dans un logement (143) formé dans le prolongement (138), et **en ce qu'**un mécanisme à rochet associé à la tige (142) est agencé à une extrémité inférieure (138a) du prolongement.

8. Dispositif de suspension télescopique selon la revendication 3, **caractérisé en ce que** le bouton d'actionnement (332) a la forme d'une clé portant le système de repérage de précontrainte (339) qui vient s'engager dans la partie supérieure du bouchon (318), la clé (332) coopérant avec le plongeur (338).

9. Cadre (410) de vélo (400) comportant au moins un dispositif de suspension (10) selon l'un quelconque des revendications précédentes.

## Patentansprüche

1. Teleskopische Federungsvorrichtung (10), die dazu ausgestaltet ist, an einer Nabe (422) eines Rades (424) angebracht zu sein, die ein erstes Rohr (12, 112, 212), ein zweites Rohr (14, 114, 214), das in Bezug auf das erste Rohr verschiebbar ist, und eine Hauptfeder (34, 134, 234) umfasst, die im Inneren der Rohre angeordnet ist, und ferner einen Deckel (18, 118, 218, 318) zur Regelung der Vorspannung der Hauptfeder (34, 134, 234) umfasst, der am oberen Ende (16) des ersten Rohres (12, 112, 212) eingerichtet ist, **dadurch gekennzeichnet, dass** der Deckel (18, 118, 218) zur Regelung der Vorspannung der Hauptfeder ein Vorspannungsidentifikationssystem (39, 139, 239) der Hauptfeder (34, 134, 234) umfasst, das für das Gewicht des Benutzers repräsentativ ist.

2. Teleskopische Federungsvorrichtung (10) nach Anspruch 1, **dadurch gekennzeichnet, dass** der Regelungsdeckel (18, 118, 218, 318) einen Körper (28, 128, 228) umfasst, der am oberen Ende (16) des ersten Rohres befestigt ist, dadurch dass der Körper (28, 128, 228) einen Stößel (30, 130, 230, 330) aufnimmt, der außen mit einem Gewinde versehen ist und in einen Innengewindeabschnitt des Körpers (28, 128, 228) geschraubt ist, dadurch, dass der Stößel (30, 130, 230, 330) gegen eines der Enden (34b, 134b, 234b) der Hauptfeder (34, 134, 234) in Auflage ist, und dadurch, dass ein Betätigungsknopf (32, 132, 232, 332) drehbar an einem Ende des Körpers (28, 128, 228) montiert und durch eine verschiebbare Anordnung mit einer Längsnut (30b) und -rippe (38b) drehbar an den Stößel (30, 130, 230, 330) gekoppelt ist.

3. Teleskopische Federungsvorrichtung (10) nach Anspruch 2, **dadurch gekennzeichnet, dass** der Stößel (30) eine axiale Aussparung (30c) umfasst, in die eine Verlängerung (38) des Betätigungsknopfes (32) eingreift, und dadurch, dass die verschiebbare Anordnung zwischen der Verlängerung und der Innenfläche der axialen Aussparung definiert ist.

4. Teleskopische Federungsvorrichtung (10) nach Anspruch 3, **dadurch gekennzeichnet, dass** der Betätigungsknopf (32) einen äußeren Greifteil umfasst, der mit einem Fenster (36) versehen ist, dadurch, dass der Betätigungsknopf (32) an der Verlängerung (38) befestigt ist, dadurch, dass ein Durchgang (41) zwischen dem Stößel (30) und der Verlängerung (38) einerseits und zwischen der Verlängerung (38) und dem Knopf (32) andererseits definiert ist, wobei dieser Durchgang (41) gegenüber dem Fenster (36) verläuft, dadurch, dass das Vorspannungsidentifikationssystem (39) ein biegsames Band (40) umfasst, das in dem Durchgang aufgenommen ist, Skalen (39a) trägt, die für das Gewicht eines Benutzers repräsentativ sind, und dadurch, dass das biegsame Band (40) an einem Punkt des Stößels (30) und gegenüber dem Fenster (36) derart befestigt ist, dass die Betätigung des Betätigungsknopfes die Skalen (39a) vor dem Fenster (36) vorbeiziehen lässt und die Vorspannung der Hauptfeder (34) ändert.

5. Teleskopische Federungsvorrichtung (10) nach Anspruch 3, **dadurch gekennzeichnet, dass** das Vorspannungsidentifikationssystem (239) durch die Verlängerung (238) getragen wird, dadurch, dass der Betätigungsknopf (232) in Längsrichtung in Bezug auf den Stößel (230) zwischen zwei in Längsrichtung beabstandeten Hohlräumen (259) beweglich ist, und dadurch, dass das Identifikationssystem (239) durch den Knopf selbst getragen wird.

6. Teleskopische Federungsvorrichtung (10) nach Anspruch 5, **dadurch gekennzeichnet, dass** der Betätigungsknopf (232) gelenkige Flügel (260) umfasst, die sich jeweils an einen Teil der oberen Fläche des Deckels (218) anschmiegen.

7. Teleskopische Federungsvorrichtung (10) nach Anspruch 3, **dadurch gekennzeichnet, dass** das Vorspannungsidentifikationssystem (139) der Hauptfeder (134) durch eine Stange (142) getragen wird, die in eine Aufnahme (143) eingesetzt ist, die in der Verlängerung (138) gebildet ist, und dadurch, dass ein Mechanismus mit Sperrrad, der der Stange (142) zugehörig ist, an einem unteren Ende (138a) der Verlängerung angeordnet ist.

8. Teleskopische Federungsvorrichtung nach Anspruch 3, **dadurch gekennzeichnet, dass** der Betätigungsknopf (332) die Form eines Schlüssels aufweist, der das Vorspannungsidentifikationssystem (339) trägt und der in den oberen Teil des Deckels (318) eingreift, wobei der Schlüssel (332) mit dem Stößel (338) zusammenwirkt.

9. Rahmen (410) eines Fahrrades (400), der mindestens eine Federungsvorrichtung (10) nach einem der vorhergehenden Ansprüche umfasst.

## Claims

1. Telescopic suspension device (10) configured to be attached to the hub (422) of a wheel (424) comprising a first tube (12, 112, 212), a second tube (14, 114, 214) sliding relative to the first tube and a main spring (34, 134, 234) arranged inside said tubes, and further comprising a pretension adjustment stopper (18, 118, 218, 318) of the main spring (34, 134, 234) installed at the upper end (16) of said first tube (12, 112, 212), **characterized in that** the pretension adjustment stopper (18, 118, 218) of the main spring comprises a pretension tracking system (39, 139, 239) of the main spring (34, 134, 234) representative of the weight of the user.

2. Telescopic suspension device (10) according to claim 1, **characterized in that** said adjustment stopper (18, 118, 218, 318) comprises a body (28, 128, 228) fixed to the upper end (16) of the first tube, **in that** said body (28, 128, 228) houses a plunger (30, 130, 230, 330) threaded externally and screwed into a tapped inner portion of the body (28, 128, 228), **in that** said plunger (30, 130, 230, 330) is supported against one of the ends (34b, 134b, 234b) of the spring (34, 134, 234), and **in that** an actuation button (32, 132, 232, 332) is mounted in rotation at an end of the body (28, 128, 228) and coupled in rotation to said plunger (30, 130, 230, 330) by a sliding arrangement having longitudinal throat (30b) and groove (38b).

3. Telescopic suspension device (10) according to claim 2, **characterized in that** said plunger (30) comprises an axial recess (30c) wherein an extension (38) of the actuation button (32) engages, and **in that** said sliding arrangement is defined between said extension and the inner surface of said axial recess.

4. Telescopic suspension device (10) according to claim 3, **characterized in that** the actuation button (32) comprises an external prehension part fitted with a window (36), **in that** said actuation button (32) is fixed to said extension (38), **in that** a passage (41) is defined between the plunger (30) and the extension (38), on the one hand, and between the extension (38) and the button (32), on the other hand, this passage (41) passing opposite the window (36), **in that** the pretension tracking system (39) comprises a supple band (40), housed in the passage, bearing graduations (39a) representative of the weight of a user, and **in that** the supple band (40) is fixed to a point of the plunger (30) and opposite the window (36), such that actuation of the actuation button scrolls the graduations (39a) in front of the window (36) and modifies the pretension of the main spring (34).

5. Telescopic suspension device (10) according to claim 3, **characterized in that** the pretension tracking system (239) is supported by the extension (238), **in that** the actuation button (232) is mobile longitudinally relative to the plunger (230) between two cavities (259) spaced longitudinally, and **in that** the tracking system (239) is supported by the button itself.

6. Telescopic suspension device (10) according to claim 5, **characterized in that** the actuation button (232) comprises articulated fins (260) each joining a part of the upper surface of the stopper (218).

7. Telescopic suspension device (10) according to claim 3, **characterized in that** the pretension tracking system (139) of the spring (134) is supported by a rod (142) inserted into a housing (143) formed in the extension (138), and **in that** a ratchet mechanism connected to the rod (142) is arranged at a lower end (138a) of the extension.

8. Telescopic suspension device according to claim 3, **characterized in that** the actuation button (332) has the form of a key bearing the pretension tracking system (339) which engages in the upper part of the stopper (318), the key (332) cooperating with the plunger (338).

9. Frame (410) of a bike (400) comprising at least one suspension device (10) as claimed in any one of the preceding claims.
